# EUROPÄISCHE PATENTSCHRIFT

(11) **EP 4 234 903 B1**
(45) Veröffentlichungstag und Bekanntmachung des Hinweises auf die Patenterteilung: **30.07.2025**
(21) Anmeldenummer: 23170993.2
(22) Anmeldetag: 11.03.2021
(51) Int. Cl.: F01K 13/02, F01K 25/06, F01K 25/04, F02C 3/00, F02C 1/10

(54) **VERFAHREN ZUR ERHÖHUNG EINES ENTROPIESTROMES AN EINER STRÖMUNGSMASCHINE**
METHOD FOR INCREASING AN ENTROPY CURRENT IN A FLOW ENGINE
PROCÉDÉ D'AUGMENTATION D'UN COURANT D'ENTROPIE DANS UNE TURBOMACHINE

(30) Priorität: 13.03.2020 DE 102020001778
(43) Veröffentlichungstag der Anmeldung: 30.08.2023
(62) Teilanmeldung aus: 21727349.9
(73) Patentinhaber: Schlegel, Peer, 09131 Chemnitz (DE)
(72) Erfinder: Schlegel, Peer, 09131 Chemnitz (DE)
(74) Vertreter: Findeisen Neumann Scheit Partnerschaft mbB

(56) Entgegenhaltungen:
- GB-A- 2 528 522
- US-A- 3 972 195
- US-A- 4 008 573
- US-A1- 2012 006 022

## Beschreibung

Die Erfindung betrifft ein Verfahren zur Erhöhung des Wirkungsgrades einer Strömungsmaschine, wobei ein durch die Strömungsmaschine geführtes Fluid kinetische Energie an die Strömungsmaschine überträgt.

Thermodynamische Kreisprozesse werden in der Technik vielfältig zur Energieumwandlung genutzt. Bei den wichtigsten Prozessen für die öffentliche Energieversorgung wird der größte Teil der genutzten Energie immer noch aus fossilen Energiequellen gespeist wird, die über Millionen Jahre auf der Erde durch Photosynthese aufgebaut wurden. Dies wird mit steigendem Energiebedarf der Menschheit zunehmend zu einem Problem, da diese Energieressourcen nicht in gleicher Menge ersetzt werden können. Weiterhin verursacht die Nutzung dieser Energieformen hohe Umweltbelastungen. Daher müssen diese Energieformen zunehmend durch regenerative Energieformen ersetzt werden. Dies ist aber mit einer Reihe von Problemen verbunden.

Die zwei primären quasi unbegrenzten Energiequellen sind die Kernfusion auf der Sonne und die Kernspaltung im Erdinneren (Erdwärme). Sie treiben alle Energiekreisläufe auf der Erde an. Diese Energie kann dann auch sekundär, z.B. als Windkraft, Wasserkraft oder Geothermie, genutzt werden. Die jährlich freigesetzten primären Energiemengen sind mehr als ausreichend, um den Energiebedarf der Menschen zu decken. Sie stehen aber nicht an jedem Ort und zu jeder Zeit zur Verfügung. Weiterhin ist die Erschließung regenerativer Energiequellen oft mit hohen Kosten verbunden. Die hohe Energierückflusszeit und der geringe Erntefaktor sind eine Ursache für die weiterhin starke Nutzung fossiler Energiequellen.

Eine entscheidende Rolle spielen daher Prozesse zur Energiewandlung, Energiespeicherung und deren Wirkungsgrade. Für die Speicherung großer Energiemengen über einen längeren Zeitraum (> 6 Monate) ist bisher nur chemische Energie (z.B. Methan oder Wasserstoff) geeignet. Batteriespeicher besitzen zwar gute Wirkungsgrade, sind aber wegen der hohen Kosten und erforderlichen seltenen Materialien nur für mobile Geräte oder Tagesspeicher eine Alternative. Pumpspeicherkraftwerke sind nur in Gebieten mit großem Höhenunterschied einsetzbar. Thermische Energiespeicher bieten zwar theoretisch eine hohe Energiespeicherkapazität pro Volumen. Um diese in andere Energieformen umzuwandeln sind aber hohe Temperaturdifferenzen erforderlich. Dadurch erhöhen sich aber auch die thermischen Verluste. Thermische Speicher sind daher für den Ausgleich von Tagesschwankungen bei der Wärmeversorgung geeignet. Für die Umwandlung in andere Energieformen haben sie kaum Bedeutung, da der Wirkungsgrad bei der Energiewandlung gering ist.

Für die industrielle Energieversorgung kommen hauptsächlich thermodynamische Prozesse zum Einsatz, wobei das Optimierungspotential von Gas- oder Dampfkraftwerken begrenzt ist. Der maximale Wirkungsgrad ist durch die materialtechnisch erreichbare Höchsttemperatur und die Umgebungstemperatur begrenzt. Die Problematik bei der Energiewandlung mit thermodynamischen Prozessen zeigt sich besonders am Druckluftspeicherkraftwerk, das bisher keine kommerzielle Bedeutung erlangt hat. Bei der Verdichtung der Luft wird die thermische Energie erhöht. Da die verwendeten Erdspeicher nicht thermisch isoliert werden können, wird diese Energie als Verlust an die Umgebung abgeführt. Bei der Abgabe von Energie wird die komprimierte Luft wieder expandiert, wodurch es zu einer starken Abkühlung und Vereisung kommt. Hier fehlt die bei der Verdichtung abgegebene Energie und muss z.B. durch die Verbrennung von Erdgas ersetzt werden. Da für die Abgabe von Volumenarbeit immer eine Expansion erforderlich ist, wird bei allen thermodynamischen Prozessen eine hohe Temperaturdifferenz angestrebt.

Bei thermodynamischen Prozessen wird zwischen rechts- (Abgabe von Volumenarbeit, Wärmemotor) oder links-laufenden (Kältemaschinen, Wärmepumpen) Prozessen unterschieden.

Dem Wesen nach ist thermische Energie die Summe der Wirkungen verschiedener kinetischer Energieformen. Die (innere) Energie eines thermodynamischen Mikrozustandes besteht aus drei wesentlichen Anteilen, aus Energie der translatorische Bewegung Eₜᵣₐₙₛ, der Schwingungsenergie E_{vib} und der Rotationsenergie Eᵣₒₜ. Damit kann auch jeder Energieform ein entsprechender Anteil an der Gesamtentropie zugeordnet werden (*S_{ges} = S_{vib} + Sᵣₒₜ + Sₜᵣₐₙₛ*).

E_{vib} ist bei Gasen relativ gering und kann meist vernachlässigt werden. Bei einatomigen Gasen dominiert Eₜᵣₐₙₛ. Im flüssigen Zustand wird Eₜᵣₐₙₛ= 0 und Eᵣₒₜ dominiert. Im festen Zustand ist auch keine Rotation der Moleküle möglich und die Gesamtenergie wird von E_{vib} bestimmt. Bei mehratomigen Gasen oder an den Grenzflächen zwischen Gasen, Flüssigkeiten und Festkörpern wechselwirken diese verschiedenen kinetischen Energieformen. Damit stellt sich ein dynamisches Gleichgewicht zwischen den kinetischen Energieformen ein.

Zur Verrichtung von Volumenarbeit ist nur der translatorische Anteil (Eₜᵣₐₙₛ) der inneren Energie direkt nutzbar. Sinkt jedoch der translatorische Impuls (pₜᵣₐₙₛ) wird Energie und Entropie der Vibration und Rotation auf die translatorische Bewegung übertragen. Die translatorische Energie und Entropie steigt wieder an und der Vibrations- und Rotationsanteil verringert sich. Der Impuls bestimmt die Richtung des thermischen Energieflusses. Er korreliert mit der Temperatur. Bei rechtslaufenden thermodynamischen Prozessen wird thermische Energie bei hohem translatorischen Impuls der Moleküle (hohe Temperatur) zugeführt und mechanische Energie abgegeben. Bei geringem Impuls (niedrige Temperatur) wird thermische Energie abgeführt und mechanische Energie zugeführt. Wegen der Energie Impulsbeziehung wird damit mehr mechanische Energie abgegeben als zugeführt. Bei einer Wärmepumpe (linkslaufend) ist der Prozess invers. Damit muss dem Gesamtprozess mechanische Arbeit zugeführt werden. Das Verhältnis der Impulsintensität bestimmt damit auch den Wirkungsgrad.

Die Umwandlung von thermischer in gerichtete mechanische Energie kann mit einer isentropen Zustandsänderung erfolgen. Die Wirkprinzipien an einer Kolben- und einer Strömungsmaschine sind dabei jedoch unterschiedlich. Die auf einen Kolben wirkende Kraft ergibt sich aus dem mittleren Impuls der Moleküle und der Anzahl der Impulse (Druck). Die Moleküle treffen dabei mit einer mittleren Geschwindigkeit auf den Kolben, die etwa der Schallgeschwindigkeit entspricht. Der mittlere Impuls ergibt sich damit aus Molekülmasse und Schallgeschwindigkeit (*p̅* = m * *vₛ*). Bewegt sich der Kolben bei einer Expansion, sinkt die relative Geschwindigkeit unter die Schallgeschwindigkeit. Damit liegt der mittlere wirksame Impuls immer etwas unter dem Impuls bei Schallgeschwindigkeit. Bei einer Kompression liegt er dagegen etwas über dem Impuls bei Schallgeschwindigkeit, da der Kolben sich entgegengesetzt bewegt.

Aus dem Stand der Technik sind Strömungsmaschinen bekannt. Bei diesen wird ein kompressibles Arbeitsmedium zunächst mit einem Konfusor (Düse) beschleunigt. Im Gegensatz zu vielen anderen Energieformen besitzt thermische Energie keinen Wirkrichtungsvektor im Raum. Sie wirkt in alle Raumrichtungen gleichzeitig. Der Konfusor wandelt diese ungerichtete translatorische Energie in gerichtete laterale Energie der Strömung um. Dadurch kann die Strömung aber nur bis zur Schallgeschwindigkeit beschleunigt werden, da ab dieser Geschwindigkeit keine translatorische Energie für die Umwandlung zur Verfügung steht. Eine Lösung zur Beschleunigung über die Schallgeschwindigkeit hinaus bietet eine Laval Düse. Hier wird nach dem Erreichen der Schallgeschwindigkeit der Strömungsquerschnitt wieder vergrößert. Die dabei freigesetzte Volumenarbeit ermöglicht eine weitere laterale Beschleunigung. Ein Nachteil ist die Verringerung der Entropie durch die Querschnittserweiterung der Laval Düse. Eine Alternative beschreibt DE 10 2014 004 237 A1**.** Dabei wird ein Gemisch aus Gas und einer Flüssigkeit gemischt und beschleunigt. Durch die Zuführung von Rotations- und Vibrationsenergie aus der Flüssigkeit, kann die Mehrphasenströmung über ihre Schallgeschwindigkeit hinaus ohne Querschnittserweiterung beschleunigt werden. Die höhere Geschwindigkeit ermöglicht wegen der Energiegleichung *E* = *m*/*2* * *v²* eine höhere abgegebene Energiemenge und damit einen höheren Wirkungsgrad im Vergleich zu einer Kolbenmaschine. Ein ähnliches Verfahren wird in DE 10 2012 108 222 A1 beschrieben. Auch hier wird eine Mehrphasenströmung (Luft/Wasser) beschleunigt und auf eine Überschallgeschwindigkeit beschleunigt. Der Wasseranteil erhöht hier die Masse der Strömung und kompensiert die Verringerung der translatorischen Energie durch Zufuhr von Rotations- und Vibrationsenergie der Wassermoleküle.

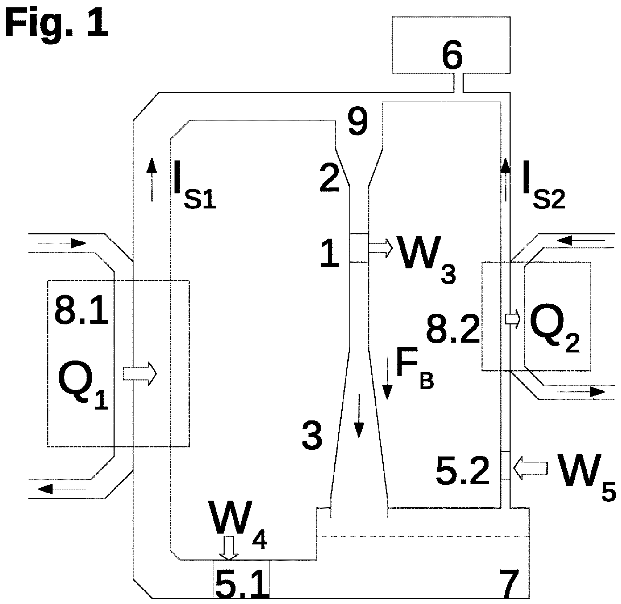

Ein wenig betrachtetes Problem bei Strömungsmaschinen ist die Beschleunigung der Moleküle nach der Strömungsmaschine. Hierzu wird auf die Fig. 1 verwiesen. Die Moleküle bewegen sich mit der Geschwindigkeit v₁ im Strömungskanal (siehe Fig. 1). Treffen sie auf die Strömungsmaschine (4) geben sie einen Großteil ihrer lateralen kinetischen Energie an die Strömungsmaschine ab und bewegen sich mit der Geschwindigkeit v₂ weiter. Da die Geschwindigkeit v₂ durch die Energieabgabe sehr gering ist, dominiert bei der Molekülbewegung die Schallgeschwindigkeit (v_{S}). Damit wirkt auch eine Kraft F₂ entgegen der Strömungsrichtung. Diese Kraft wird durch die Intensität und Anzahl der Molekülimpulse entgegen der Strömungsrichtung beeinflusst und begrenzt den Wirkungsgrad der Strömungsmaschine.

Um die Kraft zu reduzieren und den Wirkungsgrad zu erhöhen wird in der Technik thermische Energie an ein externes Reservoir abgeführt. Dadurch sinkt die Temperatur und damit die Intensität der Molekülimpulse. Um die Intensität signifikant zu verringern muss jedoch sehr viel thermische Energie und Entropie abgeführt werden. Beim Clausius-Rankine oder Organic-Rankine Verfahren wird die translatorische Geschwindigkeit durch Kondensation auf Null reduziert. Dabei muss aber die komplette translatorische Energie und bei mehratomigen Molekülen auch ein Teil der Vibrations- und Rotationsenergie abgeführt werden.

In DE 26 54 097 A1 wird der Betrieb eines rechts laufenden Kreisprozesses unterhalb der Umgebungstemperatur beschrieben. Damit besteht aber das Problem der Abführung der thermischen Energie an die Umgebung. Zur Lösung schlägt der Autor eine Wärmepumpe vor. Er erklärt aber nicht, warum diese Wärmepumpe eine geringere Antriebsenergie benötigen soll, als durch die höhere Temperaturdifferenz beim rechts laufenden Prozess zusätzlich freigesetzt wird. Durch thermische und Reibungsverluste an der Wärmepumpe muss zusätzliche thermische Energie abgeführt werden, was nach dem Energieerhaltungssatz die Nutzenergie des Gesamtsystems verringert.

In DE 10 2017 127 716 A1 wird ein Verfahren zur Kühlung durch isotherme Kompression beschrieben. Das Verfahren nutzt die Gravitationskraft zur isothermen Kompression. Die Strömungsmaschine befindet sich aber nicht im Strömungskanal der Mehrphasenströmung und Ziel des Verfahrens ist die Kompression vor der Strömungsmaschine. Wegen des geringen Entropiestromes an der Strömungsmaschine im Verhältnis zur Mehrphasenströmung ist das Verfahren nicht zur Erzeugung mechanischer Energie vorgesehen, sondern zur Kühlung.

GB 2 528 522 A offenbart einen thermodynamischen Motor, der einen Expander zum Expandieren eines mit einem zweiten Fluid kombinierten Arbeitsmediums, einen mit einem Auslass des Expanders verbundenen Separator zum Trennen des zweiten Fluids vom Arbeitsmedium und Mittel zum Durchleiten des zweiten Fluids umfasst.

US 2012/006022 A1 beschreibt ein Wärmekraftsystem, das so konfiguriert ist, dass es einer Wärmequelle Wärmeenergie entzieht, einen ersten Teil der Wärmeenergie mithilfe einer Expansionsvorrichtung in Arbeit umwandelt und einen zweiten Teil der Wärmeenergie an eine Wärmesenke abgibt. Das System nutzt ein zweites Fluid, um einen Temperaturabfall des ersten Fluids innerhalb der Expansionsvorrichtung zu verhindern.

US 3 972 195 A beschreibt eine Vorrichtung, die einen Rotor und eine Düse mit einem Auslass aufweist. Der Auslass ist so ausgerichtet ist, dass er einen Zweiphasenstrahl ausstößt, der auf den Rotor trifft und diesen damit in Rotation versetzt.

Aufgabe der Erfindung ist es, den Wirkungsgrad an einer Strömungsmaschine zu erhöhen.

Diese Aufgabe wird erfindungsgemäß mit einem Verfahren mit den Merkmalen des Anspruchs 1 gelöst. Vorteilhafte Ausgestaltungen des Verfahrens sind in den Ansprüchen 2 bis 7 aufgezeigt.

Das erfindungsgemäße Verfahren sieht vor, dass ein durch eine Strömungsmaschine geführtes Fluid kinetische Energie an die Strömungsmaschine überträgt, wobei das Fluid zwei Fluidanteile aufweist. Zumindest ein Fluidanteil des Fluids ist dabei kompressibel. Im Arbeitstemperaturbereich ist das Verhältnis cₚ/c_{V} des zweiten Fluidanteils mindestens das 1,1-fache vom Verhältnis cₚ/c_{V} des ersten Fluidanteils. Nach dem Passieren der Strömungsmaschine werden die Fluidanteile in einem Separator getrennt werden. Der erste Fluidanteil wird nach dem Separator in einem ersten Verdichter beschleunigt und/oder komprimiert. Der zweite Fluidanteil wird nach dem Separator vor einer Abführung thermischer Energie in einem zweiten Verdichter beschleunigt. Nach den Verdichtern werden beide Fluidanteile in einem Mischer wieder zusammengeführt. Die Masseströme der Fluidanteile sind so dimensioniert, dass ein Entropiestrom I_{S1} des ersten Fluidanteils am ersten Verdichter größer ist als ein Entropiestrom I_{S2} des zweiten Fluidanteils am zweiten Verdichter und ein Entropiestrom nach dem Mischer am Eingang der Strömungsmaschine die Summe aus I_{S1} und I_{S2} ist.

Das Verhältnis von Vibrations- und Rotationsenergie zur Translationsenergie wird durch den Isentropenkoeffizienten beschrieben. Daher sollte das Fluid im Arbeitstemperaturbereich zumindest einen Fluidanteil mit einem Isentropenkoeffizienten von kleinergleich 1,4 aufweisen. Ein höherer Wirkungsgrad wird mit einem Fluid erreicht, dessen zumindest einer Fluidanteil einen Isentropenkoeffizienten von kleinergleich 1,2 aufweist. Noch höher ist der Wirkungsgrad bei einen Isentropenkoeffizienten von kleinergleich 1,1.

Das Fluid kann ein Gas oder eine Mehrphasenströmung sein, wobei im Sinne der Anmeldung als Mehrphasenströmung sowohl Gasgemische, als auch Mischungen aus Gas und

Flüssigkeiten verstanden werden. Bei einer Mehrphasenströmung sollten Stoffe mit hohem Isentropenkoeffizienten (cₚ/c_{V}) mit Stoffen mit niedrigem Isentropenkoeffizienten gemischt werden (z.B. Helium/n-Butan). Der nicht volumenabhängige Anteil der thermischen Energie (Vibrations- und Rotationsenergie) sollte eine hohe Wärmekapazität im Verhältnis zur translatorischen Energie besitzen. Auch bei Flüssigkeiten ist prinzipiell die Berechnung eines Isentropenkoeffizienten (cₚ/c_{V}) möglich. Dieser beträgt etwa 1. Der Vorteil von Gasgemischen ist der bessere Energieaustausch durch die größere Wirkungsfläche der einzelnen Moleküle. Bei reinen Stoffen (Fluid aus einem Gas) ist der Anteil an Vibrations- und Rotationsenergie durch die Molekülstruktur festgelegt. Es sollten daher Gase mit sehr geringem Isentropenkoeffizienten und hoher Molekülmasse eingesetzt werden. Auch eine Mehrphasenströmung aus einem gasförmigen und einem flüssigen Fluidanteil kann eingesetzt werden, wobei zur Erzeugung der Druckverringerung nach der Strömungsmaschine die Geschwindigkeit v₂ so hoch sein sollte, dass die translatorische Geschwindigkeit der Moleküle des Gases (kompressibler Fluidanteil) mindestens das 0,3-fache der Schallgeschwindigkeit des Gases beträgt.

Grundsätzlich ist das erfindungsgemäße Verfahren aber zur Erhöhung des Wirkungsgrades beliebiger polytroper Expansionen geeignet. Bei einer Expansion an einer Kolbenmaschine wir die Energie bei Schallgeschwindigkeit entnommen und die Beschleunigungsenergie im Strömungskanal bei Relativgeschwindigkeiten unter der Schallgeschwindigkeit zugeführt. Bei Strömungsmaschinen ist aber wegen der höheren erreichbaren Relativgeschwindigkeit bei der Abgabe von mechanischer Energie ein größerer Effekt zu erwarten. Bei Kolbenmaschinen müssen außerdem wegen der diskontinuierlichen Arbeitsweise mehrere Kolben parallel und phasenverschoben betrieben werden, damit im Strömungskanal eine kontinuierliche Strömung entsteht.

Nachfolgend werden Ausführungsbeispiele der Erfindung anhand der Zeichnungen erläutert. Es zeigen:
- Fig. 1: eine Wärmepumpe mit verzweigtem Entropiestromkreis
- Fig. 2: eine Wärmepumpe mit offenem verzweigten Entropiestromkreis

**Fig. 1** zeigt eine Wärmepumpe mit verzweigtem Entropiestromkreis zur Anwendung des erfindungsgemäßen Verfahrens. Ein Fluid, bestehend aus einem ersten Fluidanteil und einem zweiten Fluidanteil, wobei zumindest der zweite Fluidanteil kompressibel ist, wird in einem Konfusor 2 beschleunigt und einer Strömungsmaschine 1 zugeführt. Nach der Strömungsmaschine 1 kann das Fluid optional durch die Kraft F_{B} im Strömungskanal und Diffusor 3 beschleunigt werden, wodurch der Druck am Ausgang der Strömungsmaschine 1 sinkt. Danach wird der zweite Fluidanteil, der im Vergleich zum ersten Fluidanteil ein größeres Verhältnis cₚ/c_{V} aufweist, im Separator 7 abgetrennt und dem zweiten Verdichter 5.2 zugeführt, wo der zweite Fluidanteil beschleunigt und/oder komprimiert wird. Durch die Verdichtung erhöht sich die Temperatur. Der erste Fluidanteil wird dem ersten Verdichter 5.1 zugeführt, wobei sich die Temperatur dabei nicht oder im Vergleich zum zweiten Fluidanteil nur sehr gering ändert. Damit kann dem ersten Fluidanteil mit Wärmetauscher 8.1 thermische Energie Q₁ zugeführt werden. Der im zweiten Verdichter 5.2 komprimierte zweite Fluidanteil gibt seine thermische Energie Q₂ mit Wärmetauscher 8.2 ab. Danach werden beide Fluidanteile im Mischer 9 zusammengeführt. Das Volumen zwischen Strömungsmaschine 1 und zweiten Verdichter 5.2 muss kleiner sein, als das Volumen zwischen erstem Verdichter 5.1 und Mischer 9. Alternativ kann ein Druckausgleichsgefäß 6 angebracht werden. Damit erzeugen die Verdichter 5.1 und 5.2 einen Unterdruck im Separator 9 der den Wirkungsgrad der Strömungsmaschine 1 erhöht. Für einen signifikanten Unterschied sollte im Arbeitstemperaturbereich an den Verdichtern 5.1, 5.2 das Verhältnis cₚ/c_{V} des zweiten Fluidanteils mindestens das 1,1-fache vom Verhältnis cₚ/c_{V} des ersten Fluidanteils sein.

Die Dimensionierung der Entropieströme hat großen Einfluss auf den Wirkungsgrad. Bei gleicher thermischer Leistung am Ein- und Ausgang (*P*₁ *= P*₂) folgt aus *I*_{*S*1} > *I*_{*S*2} wegen *P*₁ *= T*₁ · *I*_{*S*1} *= T*₂ *· I*_{*S*2} *= P*₂ auch *T*₂ > *T*₁. Damit muss die zugeführte mechanische Energie *W_{mech} =* |*W*₄| + |*W*₅| - |*W*₃| nur die Prozessverluste kompensieren. Mit *T*₂ *= T*₁ *= T* und *I*_{*S*1} *> I*_{*S*2} gilt *P*₁ *> P*₂. Aus der Maschine fließt dann ein Energiestrom *P = T*₂ · *I*_{*S*2} - *T*₁ · *I*_{*S*1} *= T* · (*I*_{*S*2} *- I*_{*S*1}). Damit kann je nach Dimensionierung der Entropieströme die Maschine auch als Wärmemotor arbeiten.

Die Masseströme der Fluidanteile sollten so dimensioniert sein, dass ein Entropiestrom I_{S1} des ersten Fluidanteils am ersten Verdichter 5.1 größer ist als ein Entropiestrom I_{S2} des zweiten Fluidanteils am zweiten Verdichter 5.2. Für eine signifikante Erhöhung des Wirkungsgrades sollte der Massestrom für I_{S1} am ersten Verdichter 5.1 mindestens fünfmal größer sein, als der Massestrom für I_{S2} am zweiten Verdichter 5.2. Der Entropiestrom am Eingang der Strömungsmaschine entspricht der Summe der beiden Entropieströme I_{S1} und I_{S2}.

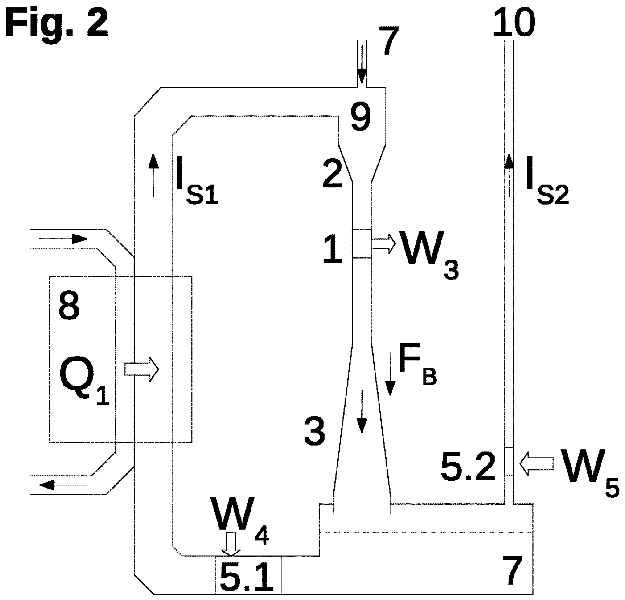

**Fig. 2** zeigt eine Wärmepumpe mit offenem verzweigten Entropiestromkreis. Die Maschine nutzt ein Fluid, dessen kompressibler Anteil aus Luft besteht. Die Luft wird am Eingang 7 aus der Atmosphäre angesaugt und im Mischer 9 mit einer inkompressiblen Flüssigkeit (z.B. Wasser) gemischt. Das Fluid wird in einem Konfusor 2 beschleunigt und einer Strömungsmaschine 1 zugeführt. Nach dem Diffusor 3 wird die Luft im Separator 7 abgetrennt und dem zweiten Verdichter 5.2 zugeführt. Der zweite Verdichter 5.2 erhöht den Druck der Luft auf Atmosphärendruck und sorgt damit für einen Unterdruck im Mischer 9. Die erhitzte Luft strömt dann über den Ausgang 10 in die Atmosphäre zurück. Der Druck des kühleren inkompressiblen Anteils des Fluids wird im ersten Verdichter 5.1 auf Atmosphärendruck erhöht. Am Wärmetauscher 8 wird dem inkompressiblen Fluid die von der Luft entzogene thermische Energie Q₁ wieder zugeführt.

### Bezugszeichenliste

- 1: Strömungsmaschine
- 2: Konfusor
- 3: Diffusor
- 5.1: erster Verdichter
- 5.2: zweiter Verdichter
- 6: Ausgleichsgefäß
- 7: Separator
- 8: Wärmetauscher
- 8.1: Wärmetauscher
- 8.2: Wärmetauscher
- 9: Mischer
- 10: Ausgang

## Patentansprüche

1. Verfahren zum Betreiben einer als Wärmepumpe ausgeführten Strömungsmaschine (1), wobei ein durch die Strömungsmaschine (1) geführtes Fluid kinetische Energie an die Strömungsmaschine (1) überträgt, wobei das Fluid zwei Fluidanteile aufweist und zumindest ein Fluidanteil des Fluids kompressibel ist und wobei im Arbeitstemperaturbereich der Wärmepumpe das Verhältnis cₚ/c_{V} eines zweiten Fluidanteils des Fluids mindestens das 1,1-fache vom Verhältnis cₚ/c_{V} eines ersten Fluidanteils des Fluids ist und wobei die Fluidanteile nach der Strömungsmaschine (1) in einem Separator (7) getrennt werden und wobei der erste Fluidanteil nach dem Separator (7) in einem ersten Verdichter (5.1) beschleunigt und/oder komprimiert und der zweite Fluidanteil nach dem Separator (7) vor einer Abführung thermischer Energie in einem zweiten Verdichter (5.2) beschleunigt werden, **dadurch gekennzeichnet, dass** nach den Verdichtern (5.1, 5.2) beide Fluidanteile in einem Mischer (9) wieder zusammengeführt werden und dass die Masseströme der Fluidanteile so dimensioniert sind, dass ein Entropiestrom I_{S1} des ersten Fluidanteils am ersten Verdichter (5.1) größer ist als ein Entropiestrom I_{S2} des zweiten Fluidanteils am zweiten Verdichter (5.2) und ein Entropiestrom nach dem Mischer (9) am Eingang der Strömungsmaschine (1) die Summe aus I_{S1} und I_{S2} ist.

2. Verfahren nach Anspruch 1, **dadurch gekennzeichnet, dass** das kompressible Fluid in Strömungsrichtung vor der Strömungsmaschine (1) in einem Konfusor (2) beschleunigt wird.

3. Verfahren nach einem der vorgenannten Ansprüche, **dadurch gekennzeichnet, dass** der Strömungsmaschine in Strömungsrichtung ein Diffusor (3) nachgelagert ist.

4. Verfahren nach einem der vorgenannten Ansprüche, **dadurch gekennzeichnet, dass** das Fluid eine Mehrphasenströmung ist und zumindest ein Fluidanteil gasförmig und ein anderer Fluidanteil des Fluids flüssig ist.

5. Verfahren nach einem der Ansprüche 1 bis 3, **dadurch gekennzeichnet, dass** als kompressibles Fluid eine Fluidmischung aus einem ersten Medium und einem zweiten Medium eingesetzt wird und dass das erste Medium einen niedrigeren Dampfdruck als das zweite Medium aufweist und dass das erste Medium sowohl bei der Beschleunigung am Konfusor (2), als auch nach der Strömungsmaschine (1) flüssig ist und dass das zweite Medium bei der Beschleunigung am Konfusor (2) zumindest teilweise gasförmig und nach dem Diffusor (3) flüssig ist.

6. Verfahren nach einem der Ansprüche 1 bis 3, **dadurch gekennzeichnet, dass** als kompressibles Fluid eine Fluidmischung aus einem ersten Medium und einem zweiten Medium eingesetzt wird, wobei das erste Medium ein Gas und das zweite Medium eine Flüssigkeit ist und dass das erste Medium vor der Beschleunigung am Konfusor (2) im zweiten Medium gelöst, bei der Beschleunigung am Konfusor (2) aus dem zweiten Medium heraustritt und nach dem Diffusor (3) wieder im zweiten Medium gelöst ist.

7. Verfahren nach einem der vorgenannten Ansprüche, **dadurch gekennzeichnet, dass** die Strömungsmaschine (1) eine Turbine oder ein magnetohydrodynamischer Generator ist.

## Claims

1. Method for operating a turbomachine (1) in the form of a heat pump, wherein a fluid guided through the turbomachine (1) transmits kinetic energy to the turbomachine (1), the fluid has two fluid components and at least one fluid component of the fluid is compressible, and, in the working temperature range of the heat pump, the ratio cₚ/c_{V} of the second fluid component is at least 1.1 times the ratio cₚ/c_{V} of the first fluid component, and the fluid components are separated downstream of the turbomachine (1) in a separator (7), and the first fluid component is accelerated and/or compressed downstream of the separator (7) in a compressor (5.1) and the second fluid component is accelerated in a further compressor (5.2) downstream of the separator (7) prior to the dissipation of thermal energy, **characterised in that,** downstream of the compressors (5.1, 5.2), the two fluid components are combined again in a mixer (9) and **in that** the mass flows of the fluid components are dimensioned in such a way that an entropy flow I_{S1} of the first fluid component at the first compressor (5.1) is greater than an entropy flow I_{S2} of the second fluid component at the second compressor (5.2) and an entropy flow downstream of the mixer (9) at the inlet of the turbomachine (1) is the sum of I_{S1} and I_{S2}.

2. Method according to Claim 1, **characterised in that** the compressible fluid is accelerated in a convergent nozzle (2) in the direction of flow upstream of the turbomachine (1).

3. Method according to one of the preceding claims, **characterised in that** a divergent nozzle (3) is arranged downstream of the turbomachine in the direction of flow.

4. Method according to any one of the preceding claims, **characterised in that** the fluid is a multiphase flow and at least one fluid component is gaseous and another fluid component of the fluid is liquid.

5. Method according to any of Claims 1 to 3, **characterised in that** a fluid mixture consisting of a first fluid and a second fluid is used as the compressible fluid and that the first fluid has a lower vapour pressure than the second fluid, and that the first fluid is liquid both during acceleration at the convergent nozzle (2) and downstream of the turbomachine (1), and that the second fluid is at least partially gaseous during acceleration at the convergent nozzle (2) and liquid downstream of the divergent nozzle (3).

6. Method according to any of Claims 1 to 3, **characterised in that** a fluid mixture consisting of a first fluid and a second fluid is used as the compressible fluid, wherein the first fluid is a gas and the second fluid is a liquid, and **in that** the first fluid is dissolved in the second fluid before acceleration at the convergent nozzle (2), is released from the second fluid during acceleration at the convergent nozzle (2) and is dissolved again in the second fluid downstream of the divergent nozzle (3).

7. Method according to one of the preceding claims, **characterised in that** the turbomachine (1) is a turbine or a magnetohydrodynamic generator.

## Revendications

1. Procédé pour faire fonctionner une turbomachine (1) conçue comme une pompe à chaleur, dans lequel un fluide guidé dans la turbomachine (1) transmet de l'énergie cinétique à la turbomachine (1), dans lequel le fluide présente deux composants fluides, dans lequel au moins un composant fluide du fluide est compressible, et dans lequel, dans la plage de température de fonctionnement de la pompe à chaleur, le rapport cₚ/c_{V} d'un second composant fluide du fluide correspond au moins à 1,1 fois le rapport cₚ/c_{V} d'un premier composant fluide du fluide, et dans lequel les composants fluides, en aval de la turbomachine (1), sont séparés dans un séparateur (7), et dans lequel le premier composant fluide, en aval du séparateur (7), est accéléré et/ou comprimé dans un premier compresseur (5.1), et dans lequel le second composant fluide, en aval du séparateur (7), est accéléré dans un second compresseur (5.2) avant une évacuation de l'énergie thermique, **caractérisé en ce qu'**en aval des compresseurs (5.1, 5.2), les deux composants fluides sont à nouveau réunis dans un mélangeur (9), et **en ce que** les débits massiques des composants fluides sont dimensionnés de telle sorte qu'un flux d'entropie I_{S1} du premier composant fluide généré au niveau du premier compresseur (5.1) est supérieur à un flux d'entropie I_{S2} du second composant fluide généré au niveau du second compresseur (5.2) et un flux d'entropie, en aval du mélangeur (9), à l'entrée de la turbomachine (1) est égal à la somme de I_{S1} et de I_{S2}.

2. Procédé selon la revendication 1, **caractérisé en ce que** le fluide compressible est accéléré dans le sens de l'écoulement, en amont de la turbomachine (1), dans un convergent (2).

3. Procédé selon l'une des revendications précédentes, **caractérisé en ce qu'**un diffuseur (3) est situé en aval de la turbomachine dans le sens de l'écoulement.

4. Procédé selon l'une des revendications précédentes, **caractérisé en ce que** le fluide est un écoulement multiphasique et qu'au moins un composant fluide est gazeux et qu'un autre composant fluide est liquide.

5. Procédé selon l'une des revendications 1 à 3, **caractérisé en ce qu'**un mélange de fluides constitué d'un premier milieu et d'un second milieu est utilisé comme fluide compressible, et **en ce que** le premier milieu présente une pression de vapeur inférieure à celle du second milieu et **en ce que** le premier milieu est liquide à la fois lors de l'accélération au niveau du convergent (2) et en aval de la turbomachine (1), et **en ce que** le second milieu est au moins partiellement gazeux lors de l'accélération au niveau du convergent (2) et liquide en aval du diffuseur (3).

6. Procédé conformément à l'une des revendications 1 à 3, **caractérisé en ce qu'**un mélange de fluides constitué d'un premier milieu et d'un second milieu est utilisé comme fluide compressible, le premier milieu étant un gaz et le second milieu étant un liquide, et **en ce que** le premier milieu est dissous dans le second milieu avant l'accélération au niveau du convergent (2), se sépare du second milieu lors de l'accélération au niveau du convergent (2) et est à nouveau dissous dans le second milieu en aval du diffuseur (3).

7. Procédé selon l'une des revendications précédentes, **caractérisé en ce que** la turbomachine (1) est une turbine ou un générateur magnétohydrodynamique.
